# EUROPEAN PATENT APPLICATION

(11) **EP 2 910 973 A1**
(43) Date of publication of application: **26.08.2015**
(21) Application number: 13847419.2
(22) Date of filing: 21.05.2013
(51) Int. Cl.: G01S 17/88, G01S 7/487, G08G 1/048

(54) **LASER DISTANCE MEASUREMENT METHOD AND LASER DISTANCE MEASUREMENT DEVICE**

(30) Priority: 19.10.2012 JP 2012231704
(71) Applicant: IHI Corporation, Tokyo 135-8710 (JP)
(72) Inventor: NAGATA, Kouichirou, Tokyo 135-8710 (JP); HISAMITSU, Yutaka, Tokyo 135-8710 (JP)
(74) Representative: Epping - Hermann - Fischer
(86) International application number: PCT/JP2013/064064
(87) International publication number: WO 2014/061301

(57) **Abstract**

A laser distance measurement method is provided in which a laser light L is irradiated while scanning in a horizontal direction and in a vertical direction of a monitoring range S, reflected light R of the laser light L is received and received light information d6 is obtained, and distance information d7 of a target object M in the monitoring range S is calculated from the received light information d6, in which, if a plurality of pieces of the reflected light R1 to Rn are received from the same laser light L and if the number of pieces of the reflected light R1 to Rn is less than a reference value N, the reflected light R received last is considered to be the reflected light R from the target object M and the distance information d7 is calculated, while if the number of pieces of the reflected light R1 to Rn is not less than the reference value N, the reflected light R received at the N-th time is considered to be the reflected light R from the target object M, and the distance information d7 is calculated.

## Description

### Technical Field

The present invention relates to a laser distance measurement method and a laser distance measurement device and particularly to a laser distance measurement method and a laser distance measurement device suitable for distance measurement if a foreign substance such as snow, dust and the like is present in a monitoring range.

### Background Art

In an obstacle detecting device or a monitoring system at an intersection or a railroad crossing, a distance measurement device using a laser radar is employed in many cases. Such distance measurement device has a light projecting portion for projecting laser light, a light receiving portion for receiving reflected light of the laser light and transmitting a light reception signal, and a signal processing portion for calculating distance data of an object from the light reception signal (see Patent Document 1, for example).

Such distance measurement devices are installed outdoors in many cases, and foreign substances such as rain, snow, mist (steam), hail, dust and the like might occur in a monitoring range. If these foreign substances are present in the monitoring range, the distance measurement device calculates reflected light from the foreign substance as distance data, which results in an increase of mis-measurement. Moreover, if a laser output is lowered so as to lower sensitivity, detection of the foreign substances can be made difficult but detection of the reflected light of a target object to be measured is also made difficult. Thus, a distance measurement device capable of distinguishing between the foreign substances such as snow from the target object without lowering sensitivity of a laser radar has been already proposed (see Patent Document 2, for example).

In the distance measurement device described in Patent Document 2, for example, if a plurality of pieces of reflected light are detected with respect to one session of transmission of a laser light, a time difference of each reflected light is measured, a range of the time difference to the reflected light generated by scatter reflection of the laser light by particles (snow, mist, rain and the like) floating in the air is stored in advance so that whether or not it is a measurement target is determined by comparing the measurement data with the stored data. This is based on the fact that the measurement data of an interval of the time difference caused by scatter reflection of mist and snow is shorter than that of the measurement data of the time difference caused by reflection of the measurement target since the reflected light generated by scatter reflection of the particles such as mist and snow occurs at a higher frequency in a near distance.

### Prior Art Document

### Patent Document

Patent Document 1: Japanese Patent Laid-Open No. 2011-43330
Patent Document 2: Japanese Patent No. 3564800

### Summary of the Invention

### Problems to be solved by the Invention

The above-described distance measurement device described in Patent Document 2 assumes a device for measuring an inter-vehicle distance and a measurement target which is getting closer needs to be detected and thus, a monitoring range of the distance measurement device is set to a near distance. Therefore, in the case of snowing or the like, scatter reflected light occurs at a high frequency in the near distance, and it becomes difficult to distinguish foreign substances from the target object and thus, the distance measurement device described in Patent Document 2 has an object to exclude the reflected light occurring at a high frequency in this near distance.

On the other hand, in an obstacle detecting device or a monitoring system at an intersection, a railroad crossing and the like, a monitoring range is set at a position away from the distance measurement device, and the reflected light occurring at a high frequency in the near distance can be easily removed on the basis of a measurement distance or intensity. However, in the case of snowing or the like, if the reflected light is detected in the monitoring range set to a far-away position, it might be difficult to distinguish the reflected light caused by the foreign substance from the reflected light caused by the measurement target object.

The present invention is made in view of the above-described problems and has an object to provide a laser distance measurement method and a laser distance measurement device which can easily distinguish the foreign substance from the target object even if the foreign substances such as snow, dust and the like are present in a monitoring range set at a far-away position.

### Means for Solving the Problems

According to the present invention, a laser distance measurement method is provided in which a laser light is irradiated while scanning in a horizontal direction and in a vertical direction of a monitoring range, reflected light of the laser light is received and received light information is obtained, and distance information of a target object in the monitoring range is calculated from the received light information, wherein, if a plurality of pieces of the reflected light are received from the same laser light and if the number of pieces of the reflected light is less than a reference value N, the reflected light received last is considered to be the reflected light from the target object and the distance information is calculated, while if the number of pieces of the reflected light is not less than the reference value N, the reflected light received at the N-th time is considered to be the reflected light from the target object, and the distance information is calculated. The reference value N is preferably 2 or 3.

Moreover, according to the present invention, in a laser distance measurement device which scans and irradiates a laser light in a horizontal direction and in a vertical direction of a monitoring range, receives reflected light of the laser light and obtains received light information and calculates distance information of a target object in the monitoring range from the received light information, the laser distance measurement device is provided having a light projecting portion which receives a light projection signal and projects the laser light, horizontal scanning means for scanning the laser light in the horizontal direction, vertical scanning means for scanning the laser light in the vertical direction, a light receiving portion for receiving the reflected light of the laser light and transmitting a light reception signal, a time measuring portion for calculating a time difference between light projection of the laser light and light reception of the reflected light from the light projection signal and the light reception signal and transmitting the received light information, and a signal processing portion for calculating the distance information of the target object from the received light information, wherein, if a plurality of pieces of the reflected light are received from the same laser light and if the number of pieces of the reflected light is less than the reference value N, the signal processing portion considers the reflected light received last to be the reflected light from the target object and calculates the distance information, and if the number of pieces of the reflected light is not less than the reference value N, the signal processing portion considers the reflected light received at the N-th time to be the reflected light from the target object and calculates the distance information. Here, the reference value N is preferably 2 or 3.

Moreover, the signal processing portion may determine that the received light information in which angle information of the horizontal scanning means matches angle information of the vertical scanning means to be the reflected light from the same laser light.

### Advantageous Effects of the Invention

According to the above-described laser distance measurement method and laser distance measurement device of the present invention, since, if the number of pieces of the reflected light is less than the reference value N, the reflected light received last is considered to be the reflected light from the target object, while if the number of pieces of the reflected light is not less than the reference value N, the reflected light received at the N-th time is considered to be the reflected light from the target object, the reflected light from the target object can be distinguished from the foreign substance without executing complicated processing or calculation. Therefore, even if the foreign substances such as snow, dust and the like are present in the monitoring range set at a far-away position, the foreign substance can be easily distinguished from the target object.

### Brief Description of the Drawings

FIG. 1 is an entire configuration diagram of a laser distance measurement device according to an embodiment of the present invention.
FIG. 2 is an entire configuration diagram of a monitoring system using the laser distance measurement device illustrated in FIG. 1.
FIG. 3A is a conceptual diagram illustrating processing contents of a signal processing portion when reflected light is received in a first received light pattern in a case of N = 3.
FIG. 3B is a conceptual diagram illustrating processing contents of the signal processing portion when the reflected light is received in a second received light pattern in a case of N = 3.
FIG. 3C is a conceptual diagram illustrating processing contents of the signal processing portion when the reflected light is received in a third received light pattern in a case of N = 3.
FIG. 3D is a conceptual diagram illustrating processing contents of the signal processing portion when the reflected light is received in a fourth received light pattern in a case of N = 3.
FIG. 4A is a conceptual diagram illustrating processing contents of the signal processing portion when reflected light is received in a first received light pattern in a case of N = 2.
FIG. 4B is a conceptual diagram illustrating processing contents of the signal processing portion when the reflected light is received in a second received light pattern in a case of N = 2.
FIG. 4C is a conceptual diagram illustrating processing contents of the signal processing portion when the reflected light is received in a third received light pattern in a case of N = 2.
FIG. 4D is a conceptual diagram illustrating processing contents of the signal processing portion when the reflected light is received in a fourth received light pattern in a case of N = 2.
FIG. 5 is a view illustrating a part of actual measurement data in snowing.
FIG. 6 is a flowchart illustrating a laser distance measurement method according to the embodiment of the present invention.

### Mode for Carrying out the Invention

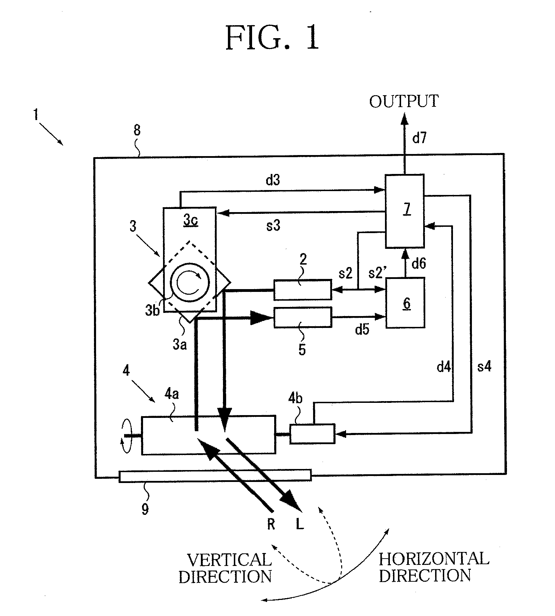

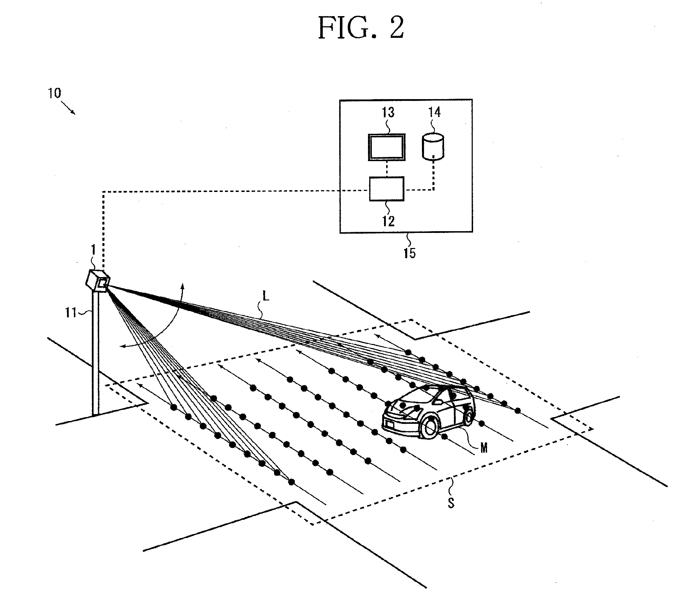

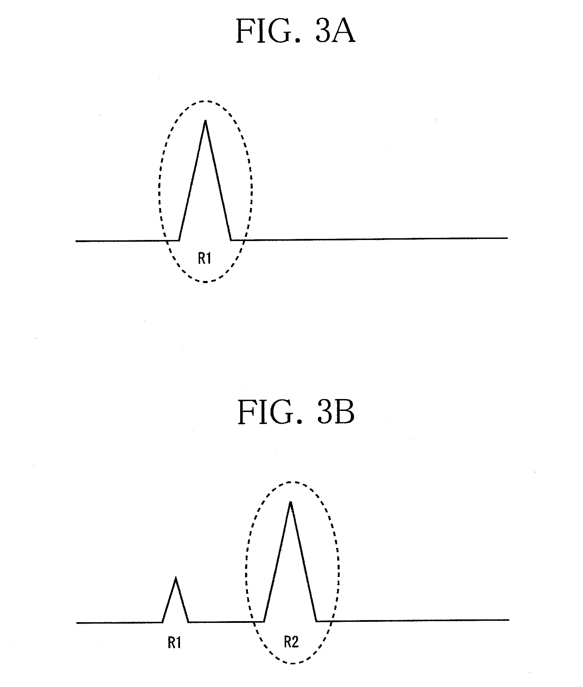

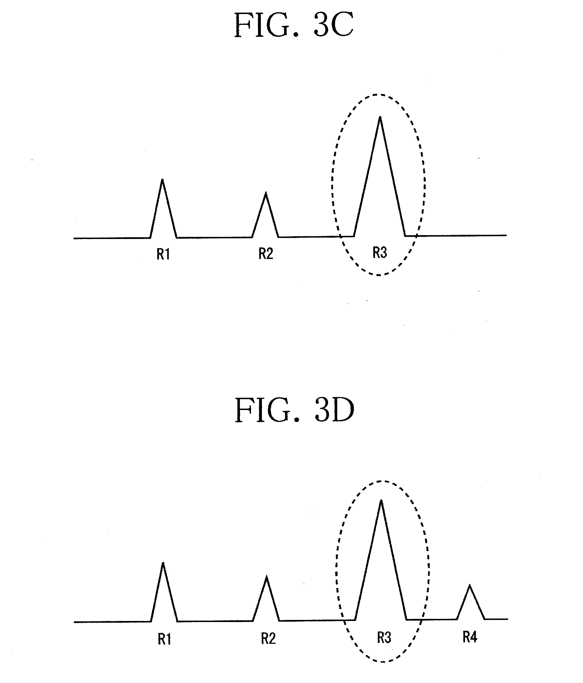

An embodiment of the present invention will be described below by using FIGs. 1 to 6. Here, FIG. 1 is an entire configuration diagram illustrating a laser distance measurement device according to an embodiment of the present invention. FIG. 2 is an entire configuration diagram of a monitoring system using the laser distance measurement device illustrated in FIG. 1. FIGs. 3A to 3D are conceptual views illustrating processing contents of a signal processing portion in a case of N = 3, in which FIG. 3A illustrates a first received light pattern, FIG. 3B illustrates a second received light pattern, FIG. 3C illustrates a third received light pattern, and FIG. 3D illustrates a fourth received light pattern.

A laser distance measurement device 1 according to an embodiment of the present invention is, as illustrated in FIGs. 1, 2, and 3A to 3D, a laser distance measurement device which scans and irradiates a laser light L in a horizontal direction and in a vertical direction of a monitoring range S, receives reflected light R of the laser light L and obtains received light information d6 and calculates distance information of a target object M in the monitoring range S from the received light information d6, has a light projecting portion 2 which receives a light projection signal s2 and projects the laser light L, horizontal scanning means 3 for scanning the laser light L in the horizontal direction, vertical scanning means 4 for scanning the laser light L in the vertical direction, a light receiving portion 5 for receiving the reflected light R of the laser light L and transmitting a light reception signal d5, a time measuring portion 6 for calculating a time difference between the light projection of the laser light L and the light reception of the reflected light R from the light projection signal s2 and the light reception signal d5 and transmitting the received light information d6, and a signal processing portion 7 for calculating the distance information d7 of the target object M from the received light information d6, configured such that, if a plurality of pieces of the reflected light R1 to Rn are received from the same laser light L and if the number of pieces of the reflected light R1 to Rn is less than the reference value N, the signal processing portion 7 considers the reflected light R received last to be the reflected light R from the target object M and calculates the distance information d7, and if the number of pieces of the reflected light R1 to Rn is not less than the reference value N, the signal processing portion 7 considers the reflected light R received at the N-th time to be the reflected light R from the target object M and calculates the distance information d7.

The laser distance measurement device 1 has a casing 8 for accommodating constituent devices such as the light projecting portion 2, the light receiving portion 5 and the like and an irradiation window 9 which transmits the laser light and the reflected light. Such laser distance measurement device 1 is used for a monitoring system 10 as illustrated in FIG. 2, for example. The monitoring system 10 illustrated in FIG. 2 has the monitoring range S set to an intersection, a railroad crossing and the like, a support 11 installed upright beside the monitoring range S, the laser distance measurement device 1 arranged at the support 11, a control device 12 for receiving output data (distance information d7) from the laser distance measurement device 1, a monitoring monitor 13 for displaying a monitoring moving image or a monitoring image of the monitoring range S on the basis of the output data (distance information d7), and a storage device 14 for storing the output data (distance information d7), the monitoring moving image or the monitoring image. In such monitoring system 10, the monitoring range S is set at a position away from the laser distance measurement device 1 by about several m to several tens m. Moreover, the control device 12, the monitoring monitor 13, and the storage device 14 are arranged in a building 15 installed at a place away from the monitoring range S in many cases. Transfer of the output data from the laser distance measurement device 1 to the control device 12 may be made via a wired line or via a wireless line.

The light projecting portion 2 is a component which emits and irradiates the laser light L. Such light projecting portion 2 is composed of a laser diode which becomes a light source, a light projecting lens which collimates the laser light L, and an LD driver for operating the laser diode, for example. The LD driver operates the laser diode so that the laser light L is emitted on the basis of the light projection signal s2 from the signal processing portion 7. The LD driver transmits the light emission synchronous signal s2' in a pulse state to the time measuring portion 6 at the same time as the emission of the laser light L.

The horizontal scanning means 3 is a polygon scanner, for example, and has a polygon mirror 3a with four side surfaces of a hexahedron made into mirror surfaces, a driving motor 3b for rotating the four mirror-surfaced side surfaces in a predetermined direction, and a housing 3c supporting the polygon mirror 3a and the driving motor 3b. By rotating the four mirror-surfaced side surfaces, the laser light L projected in a pulse state from the light projecting portion 2 has an angle in the horizontal direction polarized and scanned in the horizontal direction of the monitoring range S.

The polygon mirror 3a is rotated at a high speed by the driving motor 3b using centers of a pair of two surfaces not made into mirror surfaces as rotating axes. The driving motor 3b is operated by a motor driver (not shown). The motor driver controls a rotating speed of the driving motor 3b on the basis of a speed instruction s3 transmitted from the signal processing portion 7. Moreover, the motor driver transmits angle information d3 of the polygon mirror 3a to the signal processing portion 7. Such configuration of the horizontal scanning means 3 is only an example and is not limited to the illustrated configuration.

The vertical scanning means 4 is a galvanoscanner, for example, and has a swing mirror 4a which is a plane mirror and a driving motor 4b for making a mirror surface of the swing mirror 4a swing. By making the swing mirror 4a swing, the laser light reflected by the polygon mirror 3a has an angle in the vertical direction deflected and scanned in the vertical direction of the monitoring range S.

The swing mirror 4a is made to swing by the driving motor 4b using a center axis in the horizontal direction as a swing axis. The driving motor 4b is operated by a motor driver (not shown). The motor driver controls a swing direction and a swing speed of the driving motor 4b on the basis of a speed instruction s4 transmitted from the signal processing portion 7. Moreover, the motor driver transmits angle information d4 of the swing mirror 4a to the signal processing portion 7. Such configuration of the vertical scanning means 4 is only an example and is not limited to the illustrated configuration.

The light receiving portion 5 is a component receiving the reflected light R of the laser light L irradiated to the target object M. Here, the light projecting portion 2 and the light receiving portion 5 are provided separately and configured such that a light projecting axis and a light receiving axis are deviated from each other, but they may be configured such that the light projecting axis and the light receiving axis match each other. Such light receiving portion 5 is composed of a light receiving lens for collecting the reflected light R and a light receiving portion body having a photoelectric conversion element for receiving the collected reflected light R and converting it to a voltage and devices for applying processing such as amplification, compression, decoding and the like.

The reflected light R having transmitted through the irradiation window 9 is led to the light receiving lens through the swing mirror 4a and the polygon mirror 3a similarly to the projected laser light L. Then, the light receiving portion body having received the reflected light R transmits the light reception signal d5 having been converted to a voltage value to the time measuring portion 6. The light reception signal d5 includes light receiving intensity and light receiving time. The photoelectric conversion element is a component also called a light receiving element, and a photodiode is used, for example.

The time measuring portion 6 is a component for generating the received light information d6 of the reflected light R reflected by the target object M within the monitoring range S. The time measuring portion 6 measures time T from emission of the laser light L to reception of the reflected light R from the light emission synchronous signal s2' received from the signal processing portion 7 and the light reception signal d5 received from the light receiving portion 5 and calculates a distance from the laser distance measurement device 1 to a measurement point within the monitoring range S on the basis of the time T and generates distance data. The distance data is associated with the light emission synchronous signal s2' and the light reception signal d5 and transmitted as the received light information d6 to the signal processing portion 7. The distance to the measurement point is specifically assigned to a value half of a flying distance of the laser light (reciprocating distance of the laser light) calculated from the time T and the laser light speed. At this time, accuracy of the received light information d6 may be improved by geometrically calculating the flying distance in the laser distance measurement device 1 (a traveling distance of the laser light from the light projecting portion 2 to the swing mirror 4a and the like) and by subtracting it.

The signal processing portion 7 is a component for controlling the horizontal scanning means 3 and the vertical scanning means 4 and for generating the distance information d7 from the received light information d6 and for outputting it to the outside. The signal processing portion 7 transmits the light projection signal s2 to the light projecting portion 2, transmits the light emission synchronous signal s2' to the time measuring portion 6, transmits the speed instruction s3 to the horizontal scanning means 3, and transmits the speed instruction s4 to the vertical scanning means 4. The signal processing portion 7 also receives the angle information d3 from the horizontal scanning means 3, the angle information d4 from the vertical scanning means 4, and the received light information d6 from the time measuring portion 6. Moreover, the signal processing portion 7 generates the distance information d7 by associating the distance data of the measurement point included in the received light information d6 with the angle information d3 of the horizontal scanning means 3 and the angle information d4 of the vertical scanning means 4 and outputs the result to the control device 12.

The laser light L is a light flux having a certain diameter and has a tendency of being diffused (the diameter is enlarged) as it gets far from the light projecting portion 2. Therefore, the longer a distance is from the light projecting portion 2 to the monitoring range S, the larger the diameter of the reaching laser light L becomes. There might be an obstacle such as a building, a signboard and the like or particles such as rain, snow, mist (steam), hail, dust and the like while the laser light L reaches the measurement point of the monitoring range S. Hereinafter, these obstacles and particles are collectively referred to as "foreign substances". If such foreign substances are present, a part of a sectional area of the laser light L is reflected by the whole or a part (an edge part) of the foreign substance, while the remaining part is further reflected by the foreign substances or the target object M present on the back thereof, and a plurality of pieces of reflected light R are received from the laser light L with 1 pulse (that is, the same laser light L). Moreover, the signal processing portion 7 is configured to determine that the received light information d6 in which the angle information d3 of the horizontal scanning means 3 and the angle information d4 of the vertical scanning means 4 match each other is the reflected light R from the same laser light L.

Here, FIGs. 3A to 3D illustrate examples of a received light pattern. A first received light pattern A illustrated in FIG. 3A is a case in which one piece of the reflected light R1 is received with respect to the laser light L with 1 pulse, a second received light pattern B illustrated in FIG. 3B is a case in which two pieces of the reflected light R1 and R2 are received with respect to the laser light L with 1 pulse, a third received light pattern C illustrated in FIG. 3C is a case in which three pieces of the reflected light R1, R2, and R3 are received with respect to the laser light L with 1 pulse, and a fourth received light pattern D illustrated in FIG. 3D is a case in which four pieces of the reflected light R1, R2, R3, and R4 are received with respect to the laser light L with 1 pulse. By referring to such received light patterns, processing contents of the signal processing portion 7 when the reference value N = 3 is set will be described below.

In the first received light pattern A illustrated in FIG. 3A, since only one piece of the reflected light R1 is received with respect to the laser light L with 1 pulse, the signal processing portion 7 considers this reflected light R1 to be the reflected light R from the target object M and calculates the distance information d7.

In the second received light pattern B illustrated in FIG. 3B, the two pieces of the reflected light R1 and R2 are received with respect to the laser light L with 1 pulse, but since the number of pieces is smaller than the reference value N, that is, "3", the reflected light R2 received last is considered to be the reflected light R from the target object M, and the distance information d7 is calculated.

In the third received light pattern C illustrated in FIG. 3C, the three pieces of the reflected light R1, R2, and R3 are received with respect to the laser light L with 1 pulse, but since the number of pieces is equal to the reference value N, that is, "3", the reflected light R3 received at the N-th time equal to the number set to the reference value N, which is the third time is considered to be the reflected light R from the target object M and the distance information d7 is calculated.

In the fourth received light pattern D illustrated in FIG. 3D, the four pieces of the reflected light R1, R2, R3, and R4 are received with respect to the laser light L with 1 pulse, but since the number of pieces is larger than the reference value N "3", the reflected light R3 received at the N-th time equal to the number set to the reference value N, which is the third time is considered to be the reflected light R from the target object M and the distance information d7 is calculated.

Therefore, if the plurality of pieces of the reflected light R1 to Rn are received from the same laser light L, if the number of pieces of the reflected light R1 to Rn is less than the reference value N, the signal processing portion 7 considers the reflected light R received last to be the reflected light R from the target object M and calculates the distance information d7, while if the number of pieces of the reflected light R1 to Rn is not less than the reference value N, the signal processing portion 7 considers the reflected light R received at the N-th time to be the reflected light R from the target object M and calculates the distance information d7.

The processing contents of this signal processing portion 7 can read that, when the plurality of pieces of the reflected light R1 to Rn are received from the same laser light L, if the number of pieces of the reflected light R1 to Rn is not more than the reference value N, the reflected light R received last is considered to be the reflected light R from the target object M, and the distance information d7 is calculated, while if the number of pieces of the reflected light R1 to Rn exceeds the reference value N, the reflected light R received at the N-th time is considered to be the reflected light R from the target object M, and the distance information d7 is calculated.

By means of such processing, the reflected light R from the target object M can be distinguished from the reflected light from the foreign substance without executing complicated processing or calculations, and even if there is a foreign substance such as snow, dust or the like in the monitoring range S set at a far-away position, the foreign substance can be easily distinguished from the target object M.

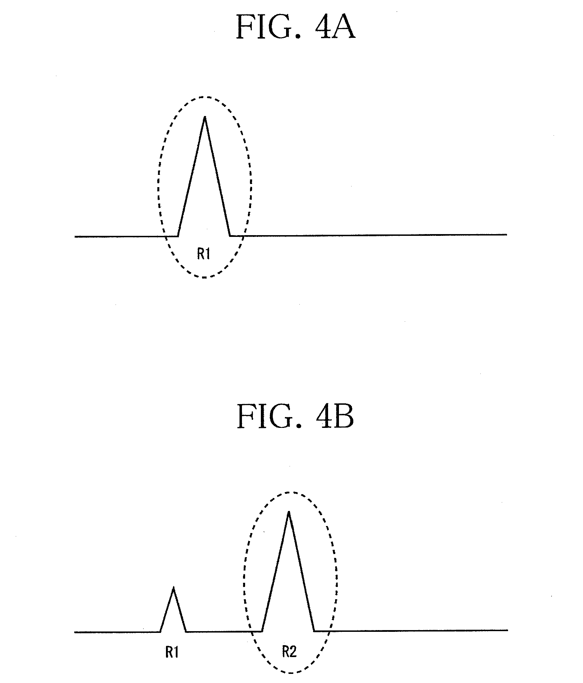

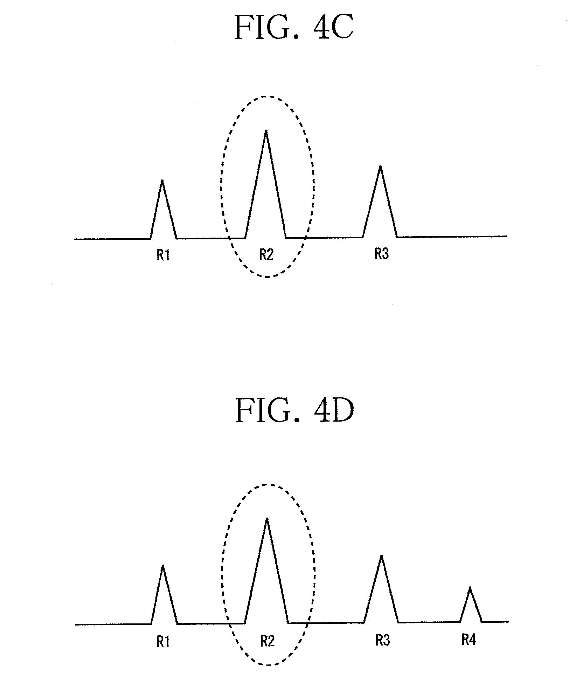

Subsequently, the processing contents of the signal processing portion 7 if the reference value N = 2 is set will be described by referring to FIGs. 4A to 4D. Here, FIGs. 4A to 4D are conceptual diagrams illustrating the processing contents of the signal processing portion in the case of N = 2, respectively, in which FIG. 4A illustrates the first received light pattern, FIG. 4B for the second received light pattern, FIG. 4C illustrates the third received light pattern, and FIG. 4D for the fourth received light pattern.

In the first received light pattern A illustrated in FIG. 4A, since only one piece of the reflected light R1 is received with respect to the laser light L with 1 pulse, the signal processing portion 7 considers this reflected light R1 to be the reflected light R from the target object M and calculates the distance information d7.

In the second received light pattern B illustrated in FIG. 4B, the two pieces of the reflected light R1 and R2 are received with respect to the laser light L with 1 pulse, but since the number of pieces is equal to the reference value N, that is, "2", the reflected light R2 received at the N-th time equal to the number set to the reference value N, which is the second time is considered to be the reflected light R from the target object M and the distance information d7 is calculated.

In the third received light pattern C illustrated in FIG. 4C, the three pieces of the reflected light R1, R2, and R3 are received with respect to the laser light L with 1 pulse, but since the number of pieces is larger than the reference value N "2", the reflected light R2 received at the N-th time equal to the number set to the reference value N, which is the second time is considered to be the reflected light R from the target object M and the distance information d7 is calculated.

In the fourth received light pattern D illustrated in FIG. 4D, the four pieces of the reflected light R1, R2, R3, and R4 are received with respect to the laser light L with 1 pulse, but since the number of pieces is larger than the reference value N "2", the reflected light R2 received at the N-th time equal to the number set to the reference value N, which is the second time is considered to be the reflected light R from the target object M and the distance information d7 is calculated.

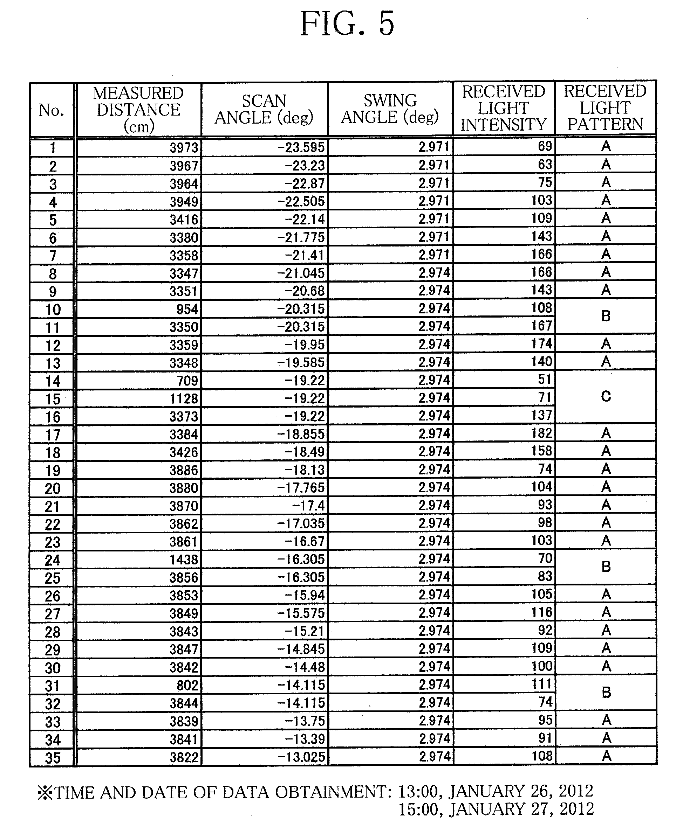

This reference value N is an integer of 2 or more and is preferably "2" or "3" but depending on the type of a foreign substance or an installation place of the laser distance measurement device 1, a numerical value of 4 or more may be set. Here, FIG. 5 is a view illustrating a part of actual measurement data in snowing. The time and date when the data was obtained is 13:00 on January 26, 2012 (snowfall of the whole day was 40 cm) and 15 o'clock on January 27, 2012 (snowfall of the whole day was 33 cm) and the place where the data was obtained is Niigata Prefecture. In this actual measurement data, 35 pieces of measurement data were extracted and displayed on FIG. 5. The snowfall per hour at the time and date of the data obtainment of this extracted data is approximately 10 cm.

In FIG. 5, a scan angle (deg) means the angle information d3 of the horizontal scanning means 3, and a swing angle (deg) means the angle information d4 of the vertical scanning means 4. The scan angle is displayed by a positive (+) angle and a negative (-) angle with the center line in a swing width in the horizontal direction as a reference (0). The swing angle is displayed by inclination to the ground surface side as a positive (+) angle with a horizontal level of an installation height of the laser distance measurement device 1 as a reference (0).

As illustrated in FIG. 5, the swing angles in the measurement data in Nos. 1 to 7 are equal at 2.971 (deg), and the swing angles in the measurement data in Nos. 8 to 35 are equal at 2.974 (deg). Therefore, it can be understood that the measurement data in Nos. 1 to 7 are measurement data at the same height and the measurement data at No. 8 to 35 are measurement data at the same height.

In the measurement data at the same height (equal swing angle), the measurement data with the equal scan angle can be recognized to be the reflected light R reflected from the same laser light L. For example, the measurement data in Nos. 10 and 11 have the equal scan angle at -20.315 (deg), the measurement data in Nos. 14 and 16 have the equal scan angle at -19.22 (deg), the measurement data in Nos. 24 and 25 have the equal scan angle at -16.305 (deg), and the measurement data in Nos. 31 and 32 have the equal scan angle at -14.115 (deg).

Therefore, the measurement data in Nos. 10 and 11, the measurement data in Nos. 24 and 25, and the measurement data in Nos. 31 and 32 correspond to the case in which two pieces of the reflected light R1 and R2 are received with respect to the laser light L with 1 pulse and are applicable to the second received light pattern B in FIG. 3B or Fig. 4B. The measurement data in Nos. 14 to 16 correspond to the case in which three pieces of the reflected light R1, R2, and R3 are received with respect to the laser light L with 1 pulse and are applicable to the third received light pattern C in FIG. 3C or FIG. 4C. The received light pattern of the measurement data other than them corresponds to the case in which only one piece of the reflected light R1 is received with respect to the laser light L with 1 pulse and is applicable to the first received light pattern A in FIG. 3A and FIG. 4A. In the illustrated actual measurement data, the measurement data corresponding to the fourth received light pattern D is not received.

As the result of extraction and analysis of such actual measurement data for 1 frame, a measurement score of the second received light pattern B to the total measurement score (392834 points) measured by the laser distance measurement device 1 is approximately 5.8% (22871 points), the measurement score of the third received light pattern C is approximately 0.1% (389 points), and the measurement score of the fourth received light pattern D is approximately 0.0% (2 points). In view of such actual measurement data, it can be easily understood that the reference value N is preferably "2" or "3" as described above, and either one of them can be arbitrarily selected in accordance with required accuracy. One session of scanning of the laser light L in the horizontal direction of the monitoring range S is referred to as 1 scan, and scanning of the entire monitoring range S by repeating scanning while swinging in the vertical direction is referred to as 1 frame.

The illustrated actual measurement data is measurement data in a heavy snowfall area, and the received light pattern at least in the case in which the foreign substance is snow can be expected to have data distribution as described above wherever the laser distance measurement device 1 is installed. Therefore, if the foreign substance is snow, it is sufficient only to set the reference value N to "2" or "3" regardless of the installation place of the laser distance measurement device 1.

In an environment where foreign substances other than snow (rain, mist (steam), hail, dust and the like, for example) can easily occur, the optimal reference value N can be set to the installation place of the laser distance measurement device 1 by obtaining the actual measurement data as described above. However, even in the case of the foreign substances other than snow, if occurrence distribution of the foreign substance is similar to that of snow, the reference value N may be set to "2" or "3" without obtaining the actual measurement data.

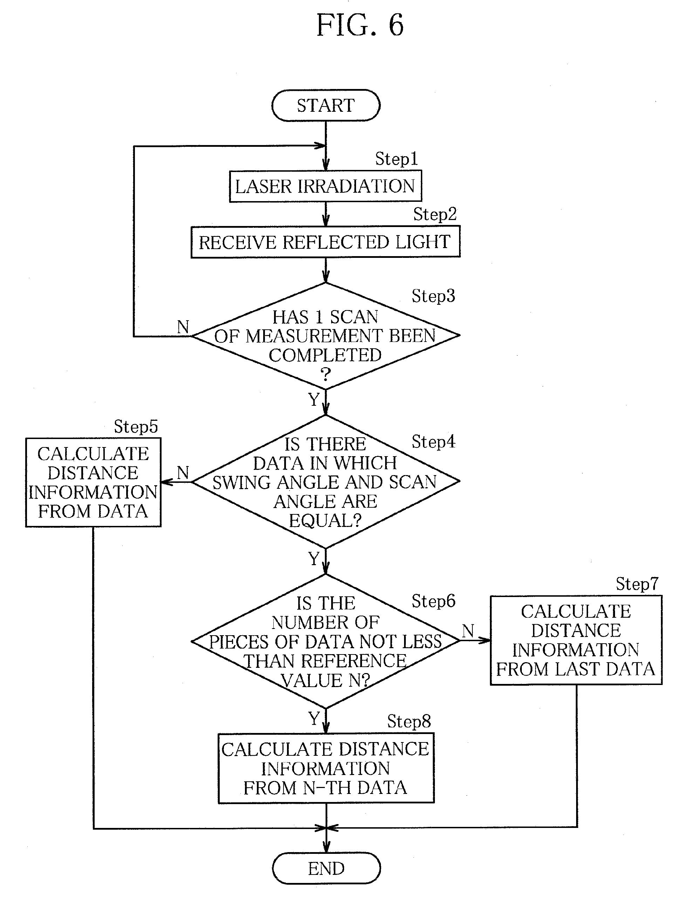

Lastly, a laser distance measurement method according to the embodiment of the present invention will be described by referring to FIG. 6. Here, FIG. 6 is a flowchart illustrating the laser distance measurement method according to the embodiment of the present invention. The above-described signal processing portion 7 executes processing in accordance with the flowchart illustrated in FIG. 6.

The laser distance measurement method according to the embodiment of the present invention is, as illustrated in FIG. 6, a laser distance measurement method in which the laser light L is irradiated while scanning in the horizontal direction and in the vertical direction of the monitoring range S, the reflected light R of the laser light L is received and the received light information d6 is obtained, and the distance information d7 of the target object M in the monitoring range S is calculated from the received light information d6, configured such that, if a plurality of pieces of the reflected light R1 to Rn are received from the same laser light L and if the number of pieces of the reflected light R1 to Rn is less than the reference value N, the reflected light R received last is considered to be the reflected light R from the target object M and the distance information d7 is calculated, while if the number of pieces of the reflected light R 1 to Rn is not less than the reference value N, the reflected light R received at the N-th time is considered to be the reflected light R from the target object M, and the distance information d7 is calculated.

Specifically, the laser distance measurement method according to this embodiment has an irradiation process Step 1 for irradiating the laser light L, a light receiving process Step 2 for receiving the reflected light R, a frame processing process Step 3 for confirming whether or not measurement of 1 scan has been completed, a received light pattern confirming process Step 4 for confirming whether or not a plurality of pieces of the reflected light R1 to Rn have been received from the same laser light L, a distance information calculating process Step 5 for calculating the distance information d7 if the plurality of pieces of the reflected light R1 to Rn have not been received from the same laser light L, the number of light receiving times confirming process Step 6 for confirming whether or not the number of pieces of the reflected light R1 to Rn is not less than the reference value N if the plurality of pieces of the reflected light R1 to Rn have been received from the same laser light L, a distance information calculating process Step 7 for calculating the distance information d7 from the reflected light R received last if the number of pieces of the reflected light R1 to Rn is less than the reference value N, and a distance information calculating process Step 8 for calculating the distance information d7 from the N-th reflected light R if the number of pieces of the reflected light R1 to Rn is not less than the reference value N.

Here, processing of the received light pattern confirming process Step 4 is executed after the measurement for 1 scan is completed, but the processing of the received light pattern confirming process Step 4 may be executed after the measurement for 1 frame has been completed.

It is needless to say that the present invention is not limited to the above-described embodiment but is capable of various changes within a range not departing from the gist of the present invention.

### Explanation of Reference Signs

- 1: laser distance measurement device
- 2: light projecting portion
- 3: horizontal scanning means
- 4: vertical scanning means
- 5: light receiving portion
- 6: time measuring portion
- 7: signal processing portion

## Claims

1. A laser distance measurement method in which a laser light is irradiated while scanning in a horizontal direction and in a vertical direction of a monitoring range, reflected light of the laser light is received and received light information is obtained, and distance information of a target object in the monitoring range is calculated from the received light information, wherein
if a plurality of pieces of the reflected light are received from the same laser light, and
if the number of pieces of the reflected light is less than a reference value N, the reflected light received last is considered to be the reflected light from the target object and the distance information is calculated; and
if the number of pieces of the reflected light is not less than the reference value N, the reflected light received at the N-th time is considered to be the reflected light from the target object, and the distance information is calculated.

2. The laser distance measurement method according to claim 1, wherein
the reference value N is 2 or 3.

3. A laser distance measurement device which scans and irradiates a laser light in a horizontal direction and in a vertical direction of a monitoring range, receives reflected light of the laser light and obtains received light information and calculates distance information of a target object in the monitoring range from the received light information, comprising:
a light projecting portion which receives a light projection signal and projects the laser light;
horizontal scanning means for scanning the laser light in the horizontal direction;
vertical scanning means for scanning the laser light in the vertical direction;
a light receiving portion for receiving the reflected light of the laser light and transmitting a light reception signal;
a time measuring portion for calculating a time difference between light projection of the laser light and light reception of the reflected light from the light projection signal and the light reception signal and transmitting the received light information; and
a signal processing portion for calculating the distance information of the target object from the received light information, wherein
if a plurality of pieces of the reflected light are received from the same laser light and if the number of pieces of the reflected light is less than the reference value N, the signal processing portion considers the reflected light received last to be the reflected light from the target object and calculates the distance information, and if the number of pieces of the reflected light is not less than the reference value N, the signal processing portion considers the reflected light received at the N-th time to be the reflected light from the target object and calculates the distance information.

4. The laser distance measurement device according to claim 3, wherein
the reference value N is 2 or 3.

5. The laser distance measurement device according to claim 3, wherein
the signal processing portion determines that the received light information in which angle information of the horizontal scanning means matches angle information of the vertical scanning means to be the reflected light from the same laser light.
